# EUROPEAN PATENT SPECIFICATION

(11) **EP 2 858 733 B1**
(45) Date of publication and mention of the grant of the patent: **02.03.2016**
(21) Application number: 12745537.6
(22) Date of filing: 25.06.2012
(51) Int. Cl.: B01D 29/19

(54) **MECHANICAL FILTERING PROCESS FOR DEHYDRATING MUDS AND FILTER PRESS IMPLEMENTING SAID PROCESS**
MECHANISCHE FILTRATIONSVERFAHREN ZUR SCHLAMMENTWÄSSERUNG UND FILTERPRESSE ZUR UMSETZUNG DIESES VERFAHRENS
PROCÉDÉ DE FILTRAGE MÉCANIQUE POUR DÉSHYDRATER DES BOUES, ET PRESSE-FILTRE METTANT EN OEUVRE LEDIT PROCÉDÉ

(30) Priority: 12.06.2012 IT PD20120190
(43) Date of publication of application: 15.04.2015
(73) Proprietor: S.P. Srl, 35013 Cittadella (PD) (IT)
(72) Inventor: SALVATO, Ugo, 35013 Cittadella (PD) (IT)
(74) Representative: Vinci, Marcello
(86) International application number: PCT/IB2012/053184
(87) International publication number: WO 2013/186598

(56) References cited:
- US-A- 1 433 966
- US-A- 4 565 637

## Description

The present patent concerns filter presses for dehydrating muds, and in particular it concerns a mechanical filtering process for dehydrating muds and a highly effective filter press suited to implement said process.

The muds resulting from production processes of various types must undergo a series of treatments before their disposal.

Among these treatments, some of which are aimed at reducing the pollution load, the mud dehydration treatment is known, which consists in reducing the quantity of water present in the mass of mud.

The dehydrated mud can thus be transported to a disposal site or be disposed of in another way, for example in incinerators, while the liquid fraction is recirculated in the mud treatment system, or sent to a purification system.

Various techniques and pieces of equipment are known that are used for dehydrating muds, among which the mechanical filtering dehydration technique is known, which consists in making the mud pass through a filtering means, usually a filtering fabric, which holds the solid fraction while allowing the liquid fraction to pass therethrough.

For this purpose filter presses are known e.g. US 1 433 966, US 4 565 637, which comprise a plurality of facing porous plates, said plates being in turn constituted by filtering or draining fabrics. The mud to be dehydrated is introduced between said plates and pressed, so that the liquid fraction contained in the mud introduced between the plates passes through said draining fabric while the solid fraction is held in the same fabric. The pressure exerted on the mass of mud to be dehydrated is applied by pressing the mud between the plates and furthermore it is applied directly by the plates, for example by means of hydraulic members acting on the plates.

The liquid fraction is conveyed towards one or more collection points or ducts or circuits, while the solid fraction remains between the plates, substantially forming a sort of panel or wafer.

In order to discharge the solid fraction, the plates are moved away from each other and the dehydrated mud wafer is removed from the filter press so that it falls into a collection hopper due to gravity.

In order to maximize the effectiveness of the filtering dehydration process, it is advisable that the space included between the plates under pressure be sufficiently reduced, so that even the liquid fraction contained in the innermost layers of the liquid panel can be eliminated from the mass of mud.

Even in this way, however, the dehydrated mud panel obtained from the mechanical filtering still contains a certain quantity of liquid that can be eliminated by subjecting the mud panel to further drying steps.

The subject of the present patent is a new type of mechanical filtering process for dehydrating muds, together with a highly effective filter press suited to implement said process.

It is the main object of the present invention to maximize efficiency in the removal of the liquid fraction from the mass of mud to be dehydrated.

It is another object of the present invention to reduce energy costs thanks to the increased efficiency in the removal of the liquid fraction.

It is an advantage of the present invention to reduce the overall dimensions of the filter press that, being modular, can be arranged according to the space available. Another advantage of the present invention lies in that it can be adapted to the quantity of muds to be treated as, being modular, the filter press can be sized accordingly.

These and other direct and complementary objects are achieved by the new mechanical filtering process for dehydrating muds and by a filter press implementing said process.

The new process comprises the following steps:
- introduction of a mass of mud to be dehydrated between porous plates for mechanical filtering;
- a first step of application of a compression force on the mass of mud by said porous plates, in the direction orthogonal to the same plates, causing a liquid fraction to be removed from the mass of mud, wherein said liquid fraction is filtered through the porous plate while the solid fraction remains between the plates;
- a second step of application of said compression force combined with a twisting moment to said mass of mud by said porous plates, with vibration, if necessary, causing the further outflow of a residual liquid fraction that is filtered through the porous plates while the solid fraction remains between the plates.

When said twisting moment is applied, the mass of mud actually undergoes a shearing stress that causes even micro fissures in the mass of mud, creating preferential channels through which the residual liquid fraction is removed from the mass of mud.

Therefore, with the same time of compression of the mass of mud, a higher degree of dehydration is obtained compared to the degree of hydration obtained by applying the known mechanical filtering processes.

Said higher efficiency thus leads to a reduction in energy consumption and to the possibility to reduce the size of the filter presses that, with the same size and in the same time, process a larger quantity of muds.

Once the application of said stress has been completed, the dehydrated mud panel obtained in this way is discharged and conveyed to further natural or induced drying steps.

The liquid fraction is then collected and conveyed towards further treatment processes or reused in various ways.

The filter press implementing said process comprises a frame, at least one pair of facing porous plates suited to translate with respect to each other thus increasing/decreasing their mutual distance, mechanical members suited to move one or both of the plates of each pair, at least one duct suited to convey the mass of mud to be dehydrated between said plates, at least one line for the collection and outflow of the liquid fraction removed from the mass of mud through filtration, at least one hopper suited to collect the dehydrated mud panels, and wherein said mechanical members act on at least one of said plates in order to exert a compression force on the mass of mud introduced between the same plates, by moving the plates near each other, and a twisting moment, by rotating at least one of said plates on the plane where it lies.

Said compression force is applied for a determined time interval, sufficient to cause the outflow of a liquid fraction contained in the mass of mud.

At the end of said time interval, maintaining in any case said compression force, the new filter press applies at the same time said twisting moment for a further predetermined time interval, causing the further outflow of a residual liquid fraction.

Said rotary movement of one or both of said plates is preferably alternated in both directions and associated with a vibratory motion to maximize the quantity of liquid fraction removed from the mass of mud.

Said pairs of plates can be arranged on said frame parallel to each other, or in any case arranged in such a way as to optimize the spaces available and reduce the overall dimensions of the machine.

The characteristics of the new filter press will be highlighted in greater detail in the following description, with reference to the enclosed drawing, attached as an example without limitation.

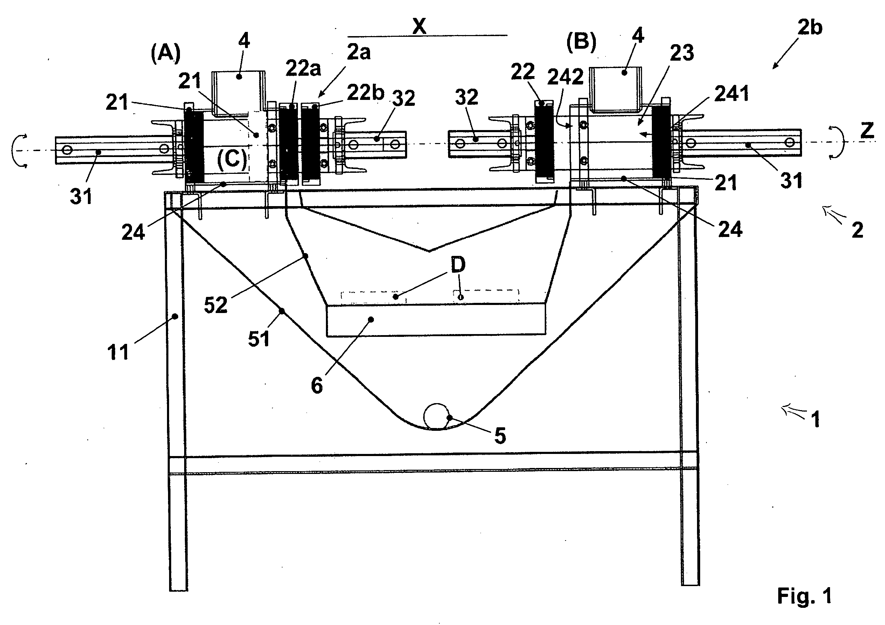

Figure 1 shows a side view of the new filter press (1) comprising a frame (11) on which there are at least two pairs (2a, 2b) of facing porous plates (21, 22) defining between them a space (23) where a mass of mud to be dehydrated can be introduced and contained, wherein each plate (21, 22) comprises filtering or draining fabrics suited to drain the liquid fraction contained in the mass of mud.

The left pair (2a) of plates (21, 22) is shown while in the loading position (A), meaning with said plates (21, 22) both arranged so as to close the two opposite ends (241, 242) of a tubular body (24), thus defining a closed space (23) in which the mud to be dehydrated can be introduced.

The right pair (2a) of plates (21, 22) is represented in the opening position (B) for the discharge of the wafer (D) of dehydrated mud through an open end (242) of said tubular body (24).

Said plates (21, 22) are suited to translate with respect to each other in a direction (X) in order to increase/decrease their mutual distance.

According to the invention, one or both of said plates (21, 22) is/are movable, that is, one or both of said plates (21, 22) can mutually translate in said direction (X). In detail, according to the invention one of said plates (22) of each pair (2a, 2b), called closing plate (22) here below, substantially translates between two positions (A, B), of which one is a loading position (A) and the other is an opening position (B).

In said loading position (A), visible in the right pair (2a) in Figure 1, the closing plate (22a) is positioned to close one end (241) of said tubular body (24), while in said opening position (B) said closing plate (22b) moves back with respect to the tubular body (24), leaving said end (242) of the tubular body (24) open.

The second plate (21) of each pair (2a, 2b), called compression plate (21) here below, translates, instead, inside said tubular body (24) towards said closing plate (22) facing it, from said loading position (A), in which it is arranged so as to close the opposite end (242) of said tubular body (24), to a position of maximum compression (C), indicated by a dashed line in Figure 1.

The new filter press also comprises mechanical members (3) suited to move one or both of said plates (21, 22) of each pair (2a, 2b), said mechanical members comprising for example fluid-operated cylinders (31, 32) acting directly or indirectly on one or both of said plates (21, 22) of each pair (2a, 2b).

Said plates (21, 22) of each pair (2a, 2b) in said closing position (A) thus define, together with said tubular body (24), a substantially closed space for the loading of the mud to be dehydrated.

For each pair (2a, 2b) of said facing plates (21, 22), the new filter press comprises at least one duct (4) suited to convey the mass of mud to be dehydrated into said space (23) included between said plates (21, 22).

Once the mud to be dehydrated has been introduced in said closed space (23), said mechanical members (31) act on said compression plate (21) of each pair (2a, 2b), translating it towards said closing plate (22) in a position of compression (C) and thus exerting a compression force on the mass of mud.

Said compression force in said direction (X) is applied for a determined time interval, sufficient to cause the outflow of a liquid fraction contained in the mass of mud.

At the end of said time interval, maintaining in any case said compression force, that is, maintaining the mass of mud included between the plates (21, 22) under pressure, said mechanical members (31) act on one or both of said plates (21, 22), preferably on said compression plate (21), exerting also a twisting moment, by rotating said plate (21) on the plane where it lies around an axis (Z) that is substantially parallel to said direction (X) of application of the compression force. Said rotation of the compression plate (21) of each pair (2) causes the further outflow of a residual liquid fraction.

Said rotary motion is preferably alternated and associated with a vibratory motion, so as to maximize the quantity of liquid fraction removed from the mass of mud.

The new filter press comprises also conveyors (51, 52) of the liquid fraction removed from the mass of mud through filtration per each one of said pairs (2a, 2b) of plates (21, 22) and at least one line or duct for the collection and outflow (5) of said liquid fraction.

The solid fraction that remains interposed between the plates (21, 22) of each pair (2a, 2b) forms a sort of panel or wafer (D) of dehydrated mud, having the dimensions of the space (23) between the plates (21, 22) in said position of maximum compression (C).

Once the dehydration process has been completed, the plates (21, 22) open, so that said dried mud panel thus obtained can be discharged.

In particular, said compression plate (21) moves back, returning to said loading position (A), while said closing plate (22) moves back to said discharge position (B), by substantially opening said end (242) of the tubular body (24) to discharge the wafer (D).

The wafer (D) is discharged by gravity or following a vibratory movement or another movement suited to cause the wafer (D) to fall on an underlying plane (6). Said plane (6) is for example a conveyor belt that carries the wafers (D) obtained towards a collection area.

In the preferred embodiment of the invention, two of said pairs (2a, 2b) of plates (21, 22) are aligned in series, that is, aligned along said direction (X) of application of the compression force, wherein said mechanical members (3) of each pair (2a, 2b) are mechanically connected to each other.

In particular, according to the invention the corresponding pneumatic cylinders (31, 32) of the two pairs (2a, 2b) are in fluid connection with each other through a single fluid circuit and operate in a reversed manner, that is, when the pneumatic cylinders (31, 32) of one pair (2a) are extended, that is, with the fluid under maximum pressure, the pneumatic cylinders (31, 32) of the other pair are withdrawn, that is, with the fluid under minimum pressure.

Said two pairs (2a, 2b) of plates (21, 22) constitute a modular unit (2) of the new filter press, wherein said modular units (2) can be arranged on said frame (11) parallel to each other, or in any case arranged so as to optimize the spaces, reducing the overall dimensions of the machine.

Therefore, with reference to the above description and the attached drawing, the following claims are expressed.

## Claims

1. Mechanical filtering process for dehydrating muds, comprising the step of introduction of a mass of mud to be dehydrated between porous plates for mechanical filtering and the step of application of a compression force on the mass of mud by said porous plates to cause the removal of a liquid fraction which is filtered through the porous plates from the mass of mud, while the solid fraction remains between the plates, **characterized in that** it comprises a second step of application of said compression force combined with at least one twisting moment on said mass of mud by said porous plates, causing the further removal of a residual liquid fraction from the mass of mud.

2. Process according to claim 1, **characterized in that** said twisting moment is applied alternately in the two directions, with or without a vibratory motion.

3. Filter press (1) for the mechanical dehydration of muds, comprising:
• a frame (11);
• at least one pair (2a, 2b) of facing porous plates (21, 22) mounted on said frame (11) and defining, with at least one tubular body (24), a closed space (23) where a mass of mud to be dehydrated can be introduced and contained, wherein each plate (21, 22) comprises filtering or draining fabrics suited to drain the liquid fraction contained in the mass of mud, said plates (21, 22) being suited to translate in a direction (X) with respect to each other and to said tubular body (24) in order to increase/decrease their mutual distance,
• at least one duct (4) suited to convey the mass of mud to be dehydrated into said closed space (23) included between said facing plates (21, 22);
• mechanical members (3) suited to move one or both of said plates (21, 22), said mechanical members comprising fluid-operated cylinders (31, 32) acting directly or indirectly on one or both of said plates (21, 22) of each pair (2a, 2b) in order to move said plates (21, 22) near to or away from each other in said direction (X),
**characterized in that** said mechanical members (3) act on at least one of said plates (21, 22) in order to exert a compression force on the mass of mud introduced between the same plates (21, 22), by moving the plates near each other, and a twisting moment, being suited to rotate at least one of said plates (21, 22) of said pair (2a, 2b) on the plane where the plates (21, 22) lie, around an axis (Z) that is substantially parallel to said translation direction (X) of the plates (21, 22).

4. Filter press (1) according to claim 3, **characterized in that** said fluid-operated cylinders (31, 32) are suited to act on said plates (21, 22) of said pair (2a, 2b) in order to exert a compression force in said direction (X) on the mass of mud introduced in the space (23) between the plates, thus removing the liquid fraction from the mass of mud, and wherein, after a given time interval, maintaining said compression force, that is, maintaining the mass of mud included between the plates (21, 22) under pressure, said mechanical members (3, 31, 32) rotate at least one of said plates (21, 22) of said pair (2a, 2b) around said axis of rotation (Z), causing the further outflow of a residual liquid fraction.

5. Filter press (1) according to claims 3, 4, **characterized in that** said mechanical members (3, 31, 32) rotate at least one of said plates (21, 22) with a rotary motion alternated to and/or associated with a vibratory motion.

6. Filter press (1) according to claims 3, 4, 5, **characterized in that** it comprises conveyors (51, 52) of the liquid fraction removed from the mass of mud through filtration per said pair (2a, 2b) of plates (21, 22) and one line or duct for the collection and outflow (5) of the liquid fraction removed from the mass of mud through filtration.

7. Filter press (1) according to claims 3, 4, 5, 6, **characterized in that** said plates (21, 22) translate between the following positions:
• loading position (A), in which said plates (21, 22) are arranged so as to close both the opposite ends (241, 242) of said tubular body (24);
• compression position (C), in which at least one of said plates (21), or compression plate, is translated towards the facing plate (22), or closing plate, to obtain the mechanical compression necessary to dehydrate the mass of mud,
• opening position (B), in which said compression plate (21) is moved backward to close the corresponding end (241) of said tubular body (24) while said closing plate (22) is moved backward with respect to said tubular body (24), opening the corresponding end (241) of said tubular body, so as to allow the wafer (D) of dehydrated mud to be discharged.

8. Filter press (1) according to claims 3, 4, 5, 6, 7, **characterized in that** two of said pairs (2a, 2b) of plates (21, 22) are arranged in series, that is, aligned along said direction (X) of application of the compression force, and wherein said mechanical members (3) of each pair (2a, 2b) are mechanically connected to each other, and wherein said two pairs (2a, 2b) of plates (21, 22) constitute a modular unit (2).

9. Filter press (1) according to claims 3, 4, 5, 6, 7, 8, **characterized in that** the respective pneumatic cylinders (31, 32) of said two pairs (2a, 2b) are in fluid connection with each other through a single fluid circuit and operate in a reversed manner, that is, when the pneumatic cylinders (31, 32) of one pair (2a) are extended, that is, with the fluid under maximum pressure, the pneumatic cylinders (31, 32) of the other pair are withdrawn, that is, with the fluid under minimum pressure.

10. Filter press (1) according to claims 3, 4, 5, 6, 7, 8, **characterized in that** said modules (2) can be arranged on said frame (11), parallel to each other, or in any case arranged so as to optimize the spaces, reducing the overall dimensions of the machine.

## Patentansprüche

1. Mechanisches Filterverfahren zur Dehydratisierung von Schlämmen, den Schritt des Einfüllens einer zu dehydratisierenden Schlammmasse zwischen poröse Platten zur mechanischen Filterung und den Schritt der Anwendung einer Kompressionskraft auf die Schlammmasse durch die besagten, porösen Platten umfassend, um die Eliminierung einer flüssigen Fraktion zu bewirken, welche durch die porösen Platten aus der Schlammmasse gefiltert wird, während die feste Fraktion zwischen den Platten verbleibt, **dadurch gekennzeichnet, dass** es einen zweiten Schritt der Anwendung der besagten Kompressionskraft umfasst, kombiniert mit wenigstens einem Verdrehmoment an der besagten Schlammmasse durch die besagten, porösen Platten, wodurch die weitere Eliminierung einer restlichen, flüssigen Fraktion aus der Schlammmasse bewirkt wird.

2. Prozess gemäß Patentanspruch 1, **dadurch gekennzeichnet, dass** das besagte Verdrehmoment abwechselnd in beide Richtungen angewandt wird, mit oder ohne Vibrationssbewegung.

3. Filterpresse (1) für die mechanische Dehydratisierung von Schlämmen, Folgendes umfassend:
• einen Rahmen (11);
• wenigstens ein Paar (2a, 2b) zueinander gerichteter, poröser Platten (21, 22), die an dem besagten Rahmen (11) montiert sind und mit wenigstens einem röhrenförmigen Körper (24) einen geschlossenen Raum (23) definieren, wo eine zu dehydratisierende Schlammmasse eingefüllt und enthalten werden kann, wobei jede Platte (21, 22) Filter- oder Dränagegewebe umfasst, die geeignet sind, die in der Schlammmasse enthaltene, flüssige Fraktion zu dränieren, und die besagten Platten (21, 22) geeignet sind, wechselseitig und bezüglich des besagten, röhrenförmigen Körpers (24) in eine Richtung (X) zu fahren, um ihren wechselseitigen Abstand zu vergrößern/zu verringern;
• wenigstens eine Leitung (4), dazu geeignet, die zu dehydratisierende Schlammmasse in den besagten, zwischen den zueinander gerichteten Platten (21, 22) eingeschlossenen Raum (23) zu leiten;
• mechanische Organe (3), dazu geeignet, eine oder beide der besagten Platten (21, 22) zu bewegen, wobei die besagten mechanischen Organe fluidbetriebene Zylinder (31, 32) umfassen, die direkt oder indirekt auf eine oder beide der besagten Platten (21, 22) jedes Paars (2a, 2b) wirken, um die besagten Platten (21, 22) in der besagten Richtung (X) zueinander oder voneinander fort zu bewegen,
**dadurch gekennzeichnet, dass** die besagten, mechanischen Organe (3) auf wenigstens eine der besagten Platten (21, 22) wirken, um eine Kompressionskraft auf die zwischen den Platten selbst (21, 22) eingefüllte Schlammmasse durch die Bewegung der Platten zueinander auszuüben, sowie ein Verdrehmoment, das dazu geeignet ist, wenigstens eine der besagten Platten (21, 22) des besagten Paars (2a, 2b) auf der Ebene zu drehen, auf der die Platten (21, 22) liegen, um eine Achse (Z), die im Wesentlichen parallel zu der besagten Translationsrichtung (X) der Platten (21, 22) steht.

4. Filterpresse (1) gemäß Patentanspruch 3, **dadurch gekennzeichnet, dass** die besagten, fluidbetriebenen Zylinder (31, 32) geeignet sind, auf die besagten Platten (21, 22) des besagten Paars (2a, 2b) zu wirken, um eine Kompressionskraft in der besagten Richtung (X) auf die in den Raum (23) zwischen den Platten eingefüllte Schlammmasse auszuüben und damit die flüssige Fraktion aus der Schlammmasse zu eliminieren, und wobei nach einem gegebenen Zeitintervall unter Aufrechterhalt der besagten Kompressionskraft, das heißt, unter Erhalt der Schlammmasse zwischen den Platten (21, 22) unter Druck, die besagten mechanischen Organe (3, 31, 32) wenigstens eine der besagten Platten (21, 22) des besagten Paars (2a, 2b) um die besagte Drehachse (Z) drehen und dadurch den weiteren Abfluss einer verbleibenden flüssigen Fraktion bewirken.

5. Filterpresse (1) gemäß den Patentansprüchen 3, 4, **dadurch gekennzeichnet, dass** die besagten, mechanischen Organe (3, 31, 32) wenigstens eine der besagten Platten (21, 22) mit einer Drehbewegung drehen, die mit einer Vibrationsbewegung abwechselt und/oder mit dieser kombiniert ist.

6. Filterpresse (1) gemäß den Patentansprüchen 3, 4, 5, **dadurch gekennzeichnet, dass** sie Fördermittel (51, 52) für die flüssige, durch Filterung aus der Schlammmasse eliminierte Fraktion für das besagte Paar (2a, 2b) von Platten (21, 22) umfasst, sowie eine Linie oder Leitung für den Auffang und Abfluss (5) der flüssigen Fraktion, die durch Filterung aus der Schlammmasse eliminiert wurde.

7. Filterpresse (1) gemäß den Patentansprüchen 3, 4, 5, 6, **dadurch gekennzeichnet, dass** die besagten Platten (21, 22) zwischen folgenden Positionen verfahren werden:
• Ladeposition (A), in der die besagten Platten (21, 22) derart angeordnet sind, dass sie beide einander entgegengesetzten Enden (241, 242) des besagten, röhrenförmigen Körpers (24) schließen;
• Kompressionsposition (C), in der wenigstens eine der besagten Platten (21) bzw. die Kompressionsplatte zu der entgegengesetzten Platte (22) bzw. Schließplatte bewegt wird, um die zur Dehydratisierung der Schlammmasse erforderliche, mechanische Kompression zu erzielen;
• Öffnungsposition (B), in der die besagte Kompressionsplatte (21) zurückbewegt wird, um das entsprechende Ende (241) des besagten, röhrenförmigen Körpers (24) zu schließen, während die besagte Schließplatte (22) bezüglich des besagten, röhrenförmigen Körpers (24) zurückbewegt wird und das entsprechende Ende (241) des besagten, röhrenförmigen Körpers öffnet, um die Scheiben (D) des dehydratisierten Schlamms zu entladen.

8. Filterpresse (1) gemäß den Patentansprüchen 3, 4, 5, 6, 7, **dadurch gekennzeichnet, dass** zwei der besagten Paare (2a, 2b) von Platten (21, 22) in Reihe angeordnet sind, das heißt entlang der besagten Richtung (X) der Ausübung der Kompressionskraft, und wobei die besagten, mechanischen Organe (3) jedes Paars (2a, 2b) mechanisch miteinander verbunden sind, und wobei die besagten zwei Paare (2a, 2b) von Platten (21, 22) eine Moduleinheit (2) bilden.

9. Filterpresse (1) gemäß den Patentansprüchen 3, 4, 5, 6, 7, 8, **dadurch gekennzeichnet, dass** die jeweiligen Pneumatikzylinder (31, 32) der besagten zwei Paare (2a, 2b) fluiddynamisch über einen einzigen Fluidkreis miteinander verbunden sind und in Umkehrweise arbeiten, das heißt, wenn die Pneumatikzylinder (31, 32) eines Paars (2a) ausgefahren sind, das heißt mit dem Fluid unter Höchstdruck, sind die Pneumatikzylinder (31, 32) des anderen Paars eingefahren, das heißt mit dem Fluid unter Mindestdruck.

10. Filterpresse (1) gemäß den Patentansprüchen 3, 4, 5, 6, 7, 8, **dadurch gekennzeichnet, dass** die besagten Module (2) auf dem besagten Rahmen (11) angeordnet werden können, parallel zueinander, oder in jedem Fall derart, dass der Raum optimiert wird und die Gesamtabmessungen der Maschine reduziert werden.

## Revendications

1. Procédé de filtration mécanique pour la déshydratation de boues, comprenant la phase d'introduction d'une masse boueuse à déshydrater entre des plaques poreuses de filtration mécanique et la phase d'application d'une force de compression sur la masse boueuse par lesdites plaques poreuses pour causer l'élimination d'une fraction liquide qui est filtrée par les plaques poreuses de la masse boueuse, alors que la fraction solide reste entre les plaques, **caractérisé en ce qu**'il comprend une deuxième phase d'application de ladite force de compression combinée à au moins un moment de torsion sur ladite masse boueuse par lesdites plaques poreuses, en provoquant l'élimination ultérieure d'une fraction liquide résiduelle de la masse boueuse.

2. Procédé selon la revendication 1, **caractérisé en ce que** ledit moment de torsion est appliqué de manière alternée dans les deux directions, avec ou sans mouvement vibratoire.

3. Filtre presse (1) pour la déshydratation mécanique de boues comprenant :
• un châssis (11),
• au moins un couple (2a, 2b) de plaques poreuses opposées entre elles (21, 22) montées sur ledit châssis (11) et définissant, avec au moins un corps tubulaire (24), un espace fermé (23) apte à introduire et contenir une masse de boue à déshydrater, où chaque plaque (21, 22) comprend des tissus filtrants ou drainants aptes à drainer la fraction liquide contenue dans la masse boueuse, lesdites plaques (21, 22) étant aptes à se déplacer par translation dans une direction (X), réciproquement et par rapport audit corps tubulaire (24) afin d'augmenter/diminuer la distance réciproque,
• au moins un conduit (4) apte à transporter la masse boueuse à déshydrater dans ledit espace fermé (23) compris entre lesdites plaques (21, 22) opposées entre elles,
• des organes mécaniques (3) aptes à déplacer une ou deux desdites plaques (21, 22), lesdits organes mécaniques comprenant des cylindres à commande hydraulique (31, 32) agissant directement ou indirectement sur une ou deux desdites plaques (21, 22) de chaque couple (2a, 2b) de façon à rapprocher/éloigner lesdites plaques entre elles (21, 22) dans ladite direction (X),
**caractérisé en ce que** lesdits organes mécaniques (3) agissent sur au moins une desdites plaques (21, 22) de façon à exercer une force de compression sur la masse boueuse introduite entre les mêmes plaques (21, 22), en rapprochant les plaques entre elles, et un moment de torsion, apte à tourner au moins une desdites plaques (21, 22) dudit couple (2a, 2b) sur le plan où se situent les plaques (21, 22), autour d'un axe (Z) qui est essentiellement parallèle à ladite direction de translation (X) des plaques (21, 22).

4. Filtre presse (1) selon la revendication 3, **caractérisé en ce que** lesdits cylindres à commande hydraulique (31, 32) sont aptes à agir sur lesdites plaques (21, 22) dudit couple (2a, 2b) afin d'exercer une force de compression dans ladite direction (X) sur la masse boueuse introduite dans l'espace (23) entre les plaques, en éliminant ainsi la fraction liquide de la masse boueuse, et où, après un intervalle de temps déterminé, en maintenant ladite force de compression, c'est-à-dire, en maintenant la masse boueuse comprise entre les plaques (21, 22) sous pression, lesdits organes mécaniques (3, 31, 32) tournent au moins une desdites plaques (21, 22) dudit couple (2a, 2b) autour dudit axe de rotation (Z), en causant l'écoulement ultérieur d'une fraction de liquide résiduelle.

5. Filtre presse (1) selon les revendications 3, 4, **caractérisé en ce que** lesdits organes mécaniques (3, 31, 32) tournent au moins une desdites plaques (21, 22) avec un mouvement rotatif alterné et/ou associé à un mouvement vibratoire.

6. Filtre presse (1) selon les revendications 3, 4, 5, **caractérisé en ce qu**'elle comprend des transporteurs (51, 52) de la fraction liquide éliminée par filtration de la masse boueuse pour ledit couple (2a, 2b) de plaques (21, 22) et une ligne ou conduit de collecte et d'écoulement (5) de la faction liquide éliminée par filtration de la masse boueuse.

7. Filtre presse (1) selon les revendications 3, 4, 5, 6, **caractérisé en ce que** lesdites plaques (21, 22) se déplacent par translation parmi les positions :
• de charge (A), dans laquelle lesdites plaques (21, 22) sont disposées de manière à fermer les deux extrémités opposées (241, 242) dudit corps tubulaire (24) ;
• de compression (C), dans laquelle au moins une desdites plaques (21), ou plaque de compression, se déplace par translation vers la plaque opposée (22), ou plaque de fermeture, pour réaliser la compression mécanique nécessaire pour déshydrater la masse boueuse ;
• d'ouverture (B), dans laquelle ladite plaque de compression (21) est reculée pour fermer l'extrémité correspondante (241) dudit corps tubulaire (24) tandis que ladite plaque de fermeture (22) est reculée par rapport audit corps tubulaire (24), en ouvrant l'extrémité correspondante (241) dudit corps tubulaire, afin de permettre le déchargement de la plaquette (D) de boue déshydratée.

8. Filtre presse (1) selon les revendications 3, 4, 5, 6, 7, **caractérisé en ce que** deux desdits couples (2a, 2b) de plaques (21, 22) sont disposés en série, c'est-à-dire alignés le long de ladite direction (X) d'application de la force de compression, et où lesdits organes mécaniques (3) de chaque couple (2a, 2b) sont mécaniquement reliés entre eux, et où lesdits deux couples (2a, 2b) de plaques (21, 22) constituent une unité modulaire (2).

9. Filtre presse (1) selon les revendications 3, 4, 5, 6, 7, 8, **caractérisé en ce que** les cylindres pneumatiques correspondants (31, 32) desdits deux couples (2a, 2b) sont reliés de manière fluide entre eux au moyen d'un circuit de fluide unique et fonctionnent de manière inversée, c'est-à-dire quand les cylindres pneumatiques (31, 32) d'un couple (2a) sont étendus, c'est-à-dire avec le fluide sous pression maximale, les cylindres pneumatiques (31, 32) de l'autre couple sont retirés, c'est-à-dire avec le fluide sous pression minimale.

10. Filtre presse (1) selon les revendications 3, 4, 5, 6, 7, 8, **caractérisé en ce que** lesdits modules (2) peuvent être disposés sur ledit châssis (11) en parallèle entre eux, ou de toute façon disposés de manière à optimiser les espaces, en réduisant les dimensions d'encombrement de la machine.
